(19) **Europäisches Patentamt**
**European Patent Office**
**Office européen des brevets**

(11) **EP 2 379 810 B1**

(12) **EUROPEAN PATENT SPECIFICATION**

(45) Date of publication and mention
of the grant of the patent:
**13.07.2016 Bulletin 2016/28**

(51) Int Cl.:
***E02B 3/10*** *(2006.01)*

(21) Application number: **09825624.1**

(86) International application number:
**PCT/IB2009/008073**

(22) Date of filing: **17.12.2009**

(87) International publication number:
**WO 2010/082083 (22.07.2010 Gazette 2010/29)**

(54) **METHOD FOR CONSTRUCTING WATER BARRIERS AND COASTAL PROTECTION**

VERFAHREN FÜR DEN BAU VON WASSERSPERREN UND KÜSTENSCHUTZ

PROCÉDÉ DE CONSTRUCTION DE BARRIÈRES ANTI-EAU ET DE PROTECTION CÔTIÈRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.12.2008 BE 200800683**

(43) Date of publication of application:
**26.10.2011 Bulletin 2011/43**

(73) Proprietor: **Dredging International N.V.
2070 Zwijndrecht (BE)**

(72) Inventors:
• **VAN DEN BROECK, Marc
B-9310 Aalst (BE)**
• **MAERTENS, Jonas Benjamin Roger
B-9820 Merelbeke (BE)**

(74) Representative: **Brouwer, Hendrik Rogier et al
Arnold & Siedsma
P.O. Box 18558
2502 EN Den Haag (NL)**

(56) References cited:
**NL-A- 8 103 036      NL-C2- 1 030 652
US-A- 5 228 800**

**Description**

The invention relates to a method for constructing water barriers and coastal protection, such as in particular breakwaters, and a water barrier obtained with the method.

Breakwaters comprise structures erected from relatively hard rock which are arranged in the sea in order to protect the coastal area behind. This protection is brought about in that the breakwater absorbs a significant part of the wave energy of the incoming waves, whereby the wave reaches the coastal area in attenuated form. The known rockfill breakwater is generally erected from a core of quarry run with a heavier protective layer on the outside, the so-called armour layer. This armour layer generally comprises larger and heavier stone blocks than the core material. Concrete elements are also applied. The stone blocks have a somewhat irregular shape so that the protective layer is sufficiently porous or permeable for the waves. Because the waves can partially penetrate the protective layer, the wave energy is attenuated.

In addition to attenuating waves, a breakwater protects against coastal deterioration through erosion, caused by unfavourable sediment transport from the coastal area to sea. The breakwater interferes in the natural transport pattern of sediment such that erosion of the coastal area is prevented, or in any case reduced.

Owing to the protective action of a breakwater regular sand replenishments along the eroded coastline are less necessary. A drawback of the known water barrier or coastal protection, in particular breakwater, is that the effect on the sediment transport along the coastline depends on a large number of parameters, such as for instance the length of the breakwater and/or the distance thereof from the coast. At non-optimal ratios problems regularly occur which can be traced back to unfavourable sediment transport. The known breakwater can thus for instance cause the formation of bell-shaped sediment accumulations (so-called 'salients'). The known breakwater is also susceptible to erosion in the vicinity of the foot of the breakwater, which undermines the stability of the breakwater.

NL 1030652 C2 discloses a method for the construction of a coastal protection according to the preamble of claim 1.

The present invention has for its object to provide a method with which water barriers, and in particular breakwaters, can be constructed, wherein at least an equivalent protection is provided as with the known water barrier and wherein the above stated problems can be at least partly obviated.

This object is achieved according to the invention, as defined in claim 1, by providing a method for constructing a coastal barrier comprising water barrier of the above stated type, wherein a core of quarry run is arranged on the underwater bottom and is provided with a protective layer of stones or concrete blocks, with the proviso that, at and beyond a the position of the water barrier, the underwater bottom is raised using bottom material. With the invented method more bottom material or sediment is supplied at the position of the water barrier. This is at first sight unfavourable because the overall amount of bottom material in the vicinity of the water barrier greatly increases and the chance of loss of stability and/or undesirable sediment transport therefore increases. This expectation is further reinforced by newly supplied bottom material being generally less stable than bottom material that has already been present for a long time. Surprisingly however, it has been found that a water barrier obtained with the invented method is surprisingly stable and causes less undesirable sediment transport than expected.

With the inventive method a water barrier is obtained with a reduced overall height of core and protective layer relative to the known water barrier. A significant advantage hereof is that the invented water barrier can be obtained in more economic manner than the known water barrier. The materials for the core and the protective layer are generally expensive to purchase and are moreover often transported by road, this also resulting in high costs. The water barrier obtained with the invented method in any case uses a reduced volume of core material relative to the known water barrier at substantially the same water barrier level, thereby saving costs. Because the amount of material required for a water barrier increases sharply along with the depth, the invented method is particularly suitable for constructing a water barrier for relatively deep water, which is understood to mean water with a depth of at least 8 metres, more preferably at least 14 metres, and most preferably at least 20 metres.

Another advantage of the method according to the invention is that the supply of a part of the material for the water barrier can take place in simple and rapid manner. Although supply of the bottom material required for raising the underwater bottom can for instance take place by supplying this bottom material, generally sand, substantially by road, it is recommended that the bottom material is dredged in the vicinity, and more preferably in the immediate vicinity of the water barrier to be constructed. Dredging is a per se known technique and can for instance be carried out using a trailing suction hopper dredger. This comprises a drag head which, together with a suction conduit, is lowered under water at the rear of the trailing suction hopper dredger until it contacts the bottom under the influence of its own weight. Through the forward movement of the trailing suction hopper dredger the drag head is dragged over the bottom for dredging, wherein the soil is loosened and suctioned away with water via the suction conduit. If desired, the suctioned bottom material can be transported immediately via a transport conduit to the desired location, more in particular to the vicinity of the water barrier to be constructed.

The method according to the invention is characterized in that the underwater bottom is raised with bottom material prior to the core being arranged. A more efficient method is hereby obtained, which moreover provides a greater reliability. It is thus possible for instance to determine the height of the raised underwater bottom before the core is arranged. If desired, the raised part of the underwater bottom can also be compacted or treated in other manner.

The underwater bottom can in principle be raised to any height according to the invention, wherein the stability of the water barrier remains guaranteed. A water barrier consisting substantially wholly of bottom material will generally be too unstable, and cannot therefore fulfill its function properly. In a preferred embodiment of the method according to the invention the underwater bottom is raised to a height such that the average water depth at the position of the water barrier decreases by 20 to 80%, more preferably by 30 to 70%, and most preferably by 40 to 60%. The water barrier is found to produce the best results within this range.

It has been found that a particularly stable water barrier is obtained with a method wherein the underwater bottom is raised to a water depth which does not exceed 50% of the closure depth, more preferably does not exceed 75% of the closure depth, and most preferably does not exceed the closure depth. The closure depth is a term known to the skilled person: when water depths are regularly measured away from the coastline, there is found to be a minimum water depth above which the water depths do not change through time. This depth is called the closure depth. The closure depth can be determined experimentally or, in the context of the present patent application, can be derived in simple manner by the following approximate formula:

$$d_l = 1.75 \; H_{s0.137} \qquad\qquad (1)$$

wherein $d_1$ represents the closure depth and $H_{s0.137}$ is the effective wave height at the position of the water barrier. The effective wave height is that wave height which is exceeded a maximum of 12 hours per year and therefore has a maximum occurrence probability of 0.137%.

The method according to the invention is preferably performed in that the underwater bottom is raised to a level such that the volume of material required for core and protective layer decreases by 20 to 80% relative to a water barrier with non-raised underwater bottom, more preferably by 30 to 70%, and most preferably by 40 to 60%. Statically stable breakwaters, such as of the above described type, should generally deform only little under wave attack. A relatively heavy construction is therefore required. With the method according to the invention a water barrier is obtained which is lighter per unit volume than the known water barrier. It is surprising that this has hardly any or no effect on the stability of the water barrier. An undefended water barrier of sand would not at first sight appear to be a very obvious solution. Nature will exert its influence on such a water barrier, deform it and possibly even level it completely in the course of time. The water barrier according to the invention comprises a quantity of weighting material (quarry run and the stones of the protective layer) which is lower than the known water barrier with the same water barrier height. Nevertheless, the above stated problems hardly occur.

A further preferred embodiment of the method according to the invention is characterized in that the raised underwater bottom is compacted at least at the position of the water barrier. Compaction of the raised water bottom can for instance be performed by vibration or by pile-driving with a drop weight. It is also possible and advantageous to provide the raised water bottom with grout columns for further stabilizing thereof and to make the water barrier better resistant to earthquakes.

The raised underwater bottom can in principle be compacted to any desired saturated density. The saturated density is understood to mean the density of a volume of material which is substantially wholly saturated with water. It has been found advantageous for the raised underwater bottom to be compacted to a saturated density lying between 1.6 ton/m$^3$ and 2.3 ton/m$^3$, more preferably between 1.7 ton/m$^3$ and 2.2 ton/m$^3$ and most preferably between 1.9 ton/m$^3$ and 2.1 ton/m$^3$.

It is further advantageous to characterize the method in that a filter layer is arranged between the raised underwater bottom and the core. This measure enhances the geotechnical stability. Soil erosion at the toe of the water barrier, in particular a breakwater, is hereby reduced. Migration of bottom material to the core is further countered. Bottom material is in principle more impermeable than quarry run. Migration may thus result in a decreasing porosity of the core. The breakwater action hereby becomes less effective. The present embodiment variant at least partially avoids this. In some cases the filter layer also lets through water. A relatively permeable water barrier or breakwater has a high probability of sanding up, certainly in sand-rich conditions: waves and current supply sand which then fills the pores (in the core).

The water barrier according to the invention can further comprise multiple filter layers, for instance in the form of a stone layer between the core and the protective layer. A gradual transition is hereby obtained between the relatively finer and coarser materials. If desired, the water barrier can further be provided with a toe construction for the purpose of supporting the protective layer in the direction of the inclination of the slope and with a crown wall on top of the water barrier so that it is possible to walk thereon.

The water barrier according to the invention, and in particular a breakwater according to the invention, can be built with its crest below or above water. The height position of the crest of the breakwater relative to the average water level determines the amount of wave energy which is allowed over the structure, as well as the degree to which diffraction will occur. The more wave energy is allowed through, the smaller the wave loads on the breakwater become. Breakwaters with their crest under water have the further advantage that they allow through a (large) amount of wave energy, whereby the load on the breakwater decreases.

Fully impermeable breakwaters reflect the wave energy or dissipate the energy in a relatively small stone volume. The breakwater is here generally loaded more heavily. Such a breakwater is therefore preferably given a heavier form.

The method according to the invention is characterized in that the underwater bottom is raised gradually from the natural level thereof up to a position in the vicinity of the water barrier, whereby the raising has an inclination. The present variant has the advantage that the waves already at least partially lose their energy well before the water barrier. Model tests have moreover shown that sediment transport to the area between water barrier and coastline occurs to lesser extent. It is further advantageous here when the height of the raising increases at a substantially constant inclination in the direction of the water barrier. The best results are achieved when the angle of inclination to the horizontal direction lies between 1:2 and 1:20, more preferably between 1:5 and 1:15, and most preferably between 1:7 and 1:10. The underwater bottom is, according to the invention, raised gradually from the natural level thereof up to a position in the vicinity of the water barrier, whereby the raising has preferably an average inclination but wherein this average inclination comprises one or more horizontal parts. The horizontal parts preferably have a length which is about 2 to 3 times the raised water depth at that position.

In order to further support the favourable effect of the inclination, in a preferred embodiment of the method the inclination is provided with a plurality of water barriers which are positioned at a mutual distance from each other and which lie substantially in line with the water barrier. The crests of the multiple water barriers preferably lie at increasing height in the direction of the water barrier, with the proviso that the crest heights of the water barriers do not exceed that of the water barrier.

The invention will now be further elucidated with reference to the accompanying figures, without otherwise being limited thereto. In the figures:

figure 1 shows a schematic cross-section of a first embodiment of a water barrier according to the invention; and
figure 2 shows a schematic cross-section of a second embodiment of a water barrier according to the invention.

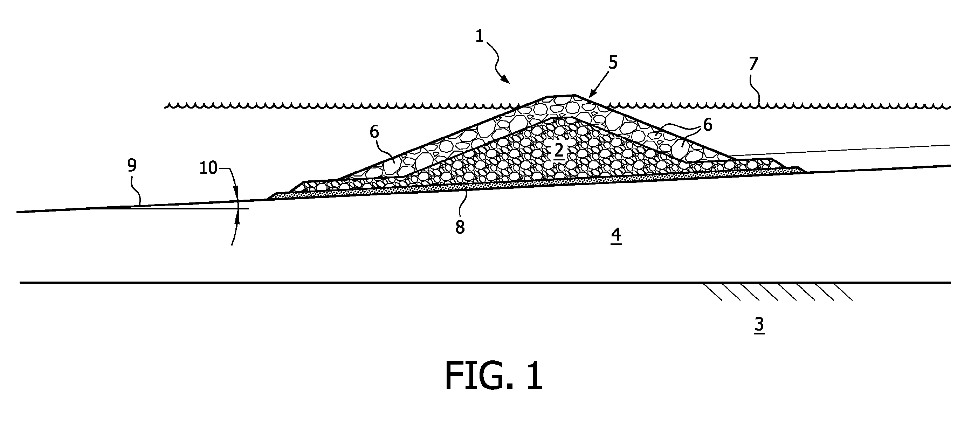

Referring to figure 1, a water barrier 1 embodied as breakwater is shown which is obtained using the method according to the invention. The shown embodiment of water barrier 1 is obtained by raising the existing underwater bottom 3, at least at the position of water barrier 1, with bottom material 4 supplied from elsewhere and subsequently arranging a core of quarry run 2 thereon, for instance by pouring it onto the supplied bottom material 4. The core of quarry run 2 is provided with an approximately 2 m thick protective layer 5 constructed from stones 6. A filter layer 8 of a granular material, with a stone size between 5 and 75 mm, is arranged between the raised water bottom 4 and core 2. It is likewise possible to apply a geotextile with a typical thickness of between 2 and 5 mm.

In the variant shown in figure 1 the top of the water barrier protrudes above water surface 7, although it is also possible for the top to lie below the water surface 7, for instance in order to conceal the breakwater from view. An existing water bottom at 14 m below water level 7 can for instance be raised to an average of for instance 5 m below water level 7 using the invented method. The underwater bottom is here thus raised to a height at which the water depth is reduced from -14 m to -5 m, therefore by about 65%. In the given example a prior art water barrier, which is arranged directly onto the existing underwater bottom, is at least approximately 14 m high. With the method according to the invention the overall height of core 2 and protective layer 6 amounts approximately to at least only 9 m, this corresponding to a height reduction of about 65%.

It is advantageous when underwater bottom 3 is raised gradually from the natural level thereof up to a position in the vicinity of water barrier 1, whereby the height of raising 4 increases at a substantially constant inclination 9 in the direction of water barrier 1. In the shown example the angle of inclination 10 to the horizontal direction lies between 1:10 and 1:20.

The raising 4 can extend over a relatively great distance on the sea side of water barrier 1 (the left-hand side in figure 1). In a preferred variant (not shown) inclination 9 is provided with a plurality of water barriers which lie substantially in line with water barrier 1 and which are obtained in the same way as water barrier 1. The crests of the water barriers herein lie at increasing height in the direction of water barrier 1 as seen from the sea side, wherein they do not however exceed the crest height of water barrier 1.

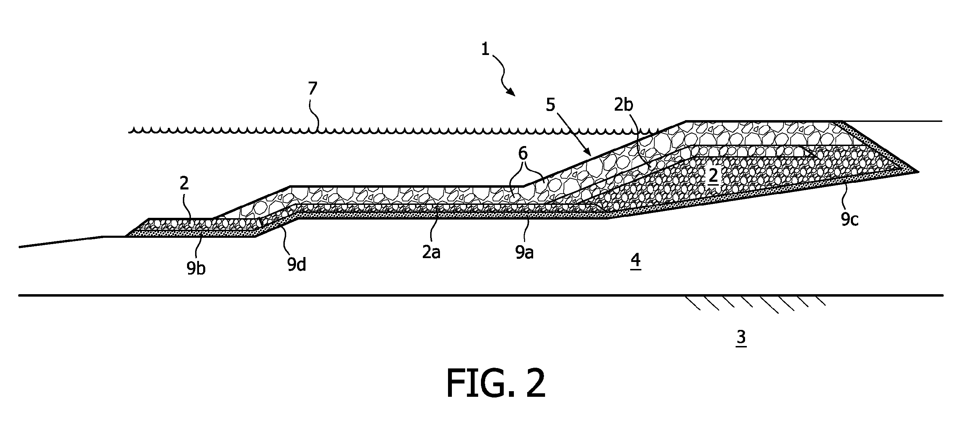

Referring to figure 2, another embodiment of a water barrier 1 is shown, which is likewise obtained using the method according to the invention. The shown embodiment of water barrier 1 is obtained by raising the existing underwater bottom 3, at least at the position of water barrier 1, using bottom material 4 supplied from elsewhere and subsequently arranging a core of quarry run (2, 2a, 2b) thereon, the central part 2a of which consists of coarser rocks and the right-hand part of which consists partially of even coarser rocks 2b. The core (2, 2a, 2b) is poured onto the supplied bottom material 4 in a number of operations. The core (2, 2a, 2b) is then provided with a protective layer 5, approximately 2 m thick and constructed from stones 6. A filter layer 8 with a thickness of 5 to 75 mm is arranged between the raised underwater bottom 4 and core 2. The parts (2a, 2b) provide for a locally increased porosity of core layer (2, 2a, 2b), whereby the wave energy is better dissipated locally. This variant further has a raising 4 with two substantially horizontal terraces (9a, 9b) and two parts (9c, 9d) which have an incline. Such a structure has a favourable influence on the breakwater action and the stability of water barrier 1.

The invention is by no means limited to the above described exemplary embodiments, and many variants are possible within the scope of protection of the appended claims.

**Claims**

1. Method for constructing coastal protection comprising a water barrier (1) and a raised underwater bottom, the water barrier (1) comprising a core of quarry run (2) and a protective layer (5) of stones or concrete blocks, **characterized in that**

   - at and beyond the position of the water barrier (1), the underwater bottom (3) is raised using bottom material (4) gradually from the natural level of the underwater bottom (3) up to a position in the vicinity of the water barrier (1), whereby the raising has an inclination;
   - the core of quarry run (2) is arranged on the raised underwater bottom and **in that**
   - the core is provided with the protective layer (5) of stones or concrete blocks.

2. Method as claimed in claim 1, **characterized in that** the underwater bottom is raised to a height such that the average water depth at the position of the water barrier decreases by 20 to 80%.

3. Method as claimed in any of the foregoing claims, **characterized in that** the underwater bottom is raised to a water depth which does not exceed 50% of the closure depth.

4. Method as claimed in claim 3, **characterized in that** the underwater bottom is raised to a water depth which does not exceed the closure depth.

5. Method as claimed in any of the foregoing claims, **characterized in that** the underwater bottom is raised to a level such that the volume of material required for the core and protective layer decreases by 20 to 80% relative to a water barrier with non-raised underwater bottom.

6. Method as claimed in any of the foregoing claims, **characterized in that** the raised underwater bottom is compacted at least at the position of the water barrier.

7. Method as claimed in claim 6, **characterized in that** the raised underwater bottom is compacted to a saturated density lying between 1.6 ton/m$^3$ and 2.3 ton/m$^3$.

8. Method as claimed in any of the foregoing claims, **characterized in that** a filter layer (8) is arranged between the raised underwater bottom and the core.

9. Method as claimed in any of the foregoing claims, **characterized in that** the height of the raising increases at a substantially constant inclination in the direction of the water barrier.

10. Method as claimed in claim 9, **characterized in that** the angle of inclination to the horizontal direction lies between 1:2 and 1:20, more preferably between 1:5 and 1:15, and most preferably between 1:7 and 1:10.

11. Method as claimed in any of the claims 1-8, **characterized in that** the raising has an average inclination and wherein this average inclination comprises one or more substantially horizontal parts (9a, 9b).

12. Method as claimed in any of the claims 9-11, **characterized in that** the inclination is provided with a plurality of water barriers which lie substantially in line with the water barrier.

13. Method as claimed in claim 12, **characterized in that** the crests of the multiple water barriers lie at increasing height, but do not exceed the crest height of the water barrier.

14. Method as claimed in any of the foregoing claims, **characterized in that** the raised underwater bottom comprises sand.

**Patentansprüche**

1. Verfahren für den Bau eines Küstenschutzes mit einer Wassersperre (1) und einem erhöhten Unterwasserboden, wobei die Wassersperre (1) einen Kern aus Bruchsteinen (2) und eine Schutzschicht (5) aus Steinen oder Betonblöcken aufweist, **dadurch gekennzeichnet, dass**

   - an der und über die Position der Wassersperre (1) hinaus der Unterwasserboden (3) stufenweise vom natürlichen Niveau des Unterwasserbodens (3) bis zu einer Position in der Nähe der Wassersperre (1) mit Bodenmaterial (4) erhöht wird, wobei die Erhöhung eine Neigung aufweist;
   - der Kern aus Bruchsteinen (2) auf dem erhöhten Unterwasserboden angeordnet ist, und dass
   - der Kern mit der Schutzschicht (5) aus Steinen oder Betonblöcken bereitgestellt wird.

2. Verfahren nach Anspruch 1, **dadurch gekennzeichnet, dass** der Unterwasserboden so erhöht wird, dass die durchschnittliche Wassertiefe an der Position der Wassersperre um 20 auf 80 % verringert wird.

3. Verfahren nach einem der vorherigen Ansprüche, **dadurch gekennzeichnet, dass** der Unterwasserboden auf eine Wassertiefe erhöht wird, die 50 % der Grenztiefe nicht überschreitet.

4. Verfahren nach Anspruch 3, **dadurch gekennzeichnet, dass** der Unterwasserboden auf eine Wassertiefe erhöht wird, die die Grenztiefe nicht überschreitet.

5. Verfahren nach einem der vorherigen Ansprüche, **dadurch gekennzeichnet, dass** der Unterwasserboden so auf ein Niveau erhöht wird, dass das Volumen des für den Kern und die Schutzschicht benötigten Materials relativ zu einer Wassersperre mit nicht erhöhtem Unterwassergrund um 20 auf 80 % verringert wird.

6. Verfahren nach einem der vorherigen Ansprüche, **dadurch gekennzeichnet, dass** der erhöhte Unterwasserboden mindestens an der Position der Wassersperre verdichtet ist.

7. Verfahren nach Anspruch 6, **dadurch gekennzeichnet, dass** der erhöhte Unterwasserboden bis zu einer gesättigten Dichte zwischen 1,6 t/m$^3$ und 2,3 t/m$^3$ verdichtet ist.

8. Verfahren nach einem der vorherigen Ansprüche, **dadurch gekennzeichnet, dass** eine Filterschicht (8) zwischen dem erhöhten Unterwasserboden und dem Kern angeordnet ist.

9. Verfahren nach einem der vorherigen Ansprüche, **dadurch gekennzeichnet, dass** die Höhe der Erhöhung mit einer im Wesentlichen konstanten Neigung in Richtung der Wassersperre zunimmt.

10. Verfahren nach Anspruch 9, **dadurch gekennzeichnet, dass** der Neigungswinkel in horizontaler Richtung zwischen 1:2 und 1:20, bevorzugt zwischen 1:5 und 1:15 und ganz bevorzugt zwischen 1:7 und 1:10 beträgt.

11. Verfahren nach einem der Ansprüche 1 bis 8, **dadurch gekennzeichnet, dass** die Erhöhung eine durchschnittliche Neigung aufweist, wobei die durchschnittliche Neigung einen oder mehrere im Wesentlichen horizontale Teile (9a, 9b) umfasst.

12. Verfahren nach einem der Ansprüche 9 bis 11, **dadurch gekennzeichnet, dass** die Neigung durch eine Mehrzahl von Wassersperren bereitgestellt wird, die im Wesentlichen in einer Linie mit der Wassersperre liegen.

13. Verfahren nach Anspruch 12, **dadurch gekennzeichnet, dass** die Kronen der zahlreichen Wassersperren in ansteigender Höhe liegen, die Kronenhöhe der Wassersperre jedoch nicht überschreiten.

14. Verfahren nach einem der vorherigen Ansprüche, **dadurch gekennzeichnet, dass** der erhöhte Unterwasserboden Sand aufweist.

**Revendications**

1. Procédé de construction d'une protection côtière comprenant une barrière anti-eau (1) et un fond sous-marin surélevé, la barrière anti-eau (1) comprenant un noyau de tout-venant (2) et une couche protectrice (5) de pierres ou de blocs de béton, **caractérisé en ce que** :

   - au niveau et au-delà de la position de la barrière anti-eau (1), le fond sous-marin (3) est surélevé graduellement au moyen de matériau (4) du fond depuis le niveau naturel du fond sous-marin (3) jusqu'à une position à proximité de la barrière anti-eau (1) de telle sorte que la surélévation présente une inclinaison ;
   - le noyau de tout-venant (2) est agencé sur le fond sous-marin surélevé et **en ce que**
   - le noyau est doté de la couche protectrice (5) de pierres ou de blocs de béton.

2. Procédé selon la revendication 1, **caractérisé en ce que** le fond sous-marin est surélevé jusqu'à une hauteur telle que la profondeur moyenne de l'eau au niveau de la position de la barrière anti-eau diminue de 20 à 80 %.

3. Procédé selon l'une quelconque des revendications précédentes, **caractérisé en ce que** le fond sous-marin est surélevé jusqu'à une profondeur d'eau qui ne dépasse pas 50 % de la profondeur de fermeture.

4. Procédé selon la revendication 3, **caractérisé en ce que** le fond sous-marin est surélevé jusqu'à une profondeur d'eau qui ne dépasse pas la profondeur de fermeture.

5. Procédé selon l'une quelconque des revendications précédentes, **caractérisé en ce que** le fond sous-marin est surélevé jusqu'à un niveau tel que le volume de matériau requis pour le noyau et la couche protectrice diminue de 20 à 80 % par rapport à une barrière anti-eau à fond sous-marin non surélevé.

6. Procédé selon l'une quelconque des revendications précédentes, **caractérisé en ce que** le fond sous-marin surélevé est compacté au moins au niveau de la position de la barrière anti-eau.

7. Procédé selon la revendication 6, **caractérisé en ce que** le fond sous-marin surélevé est compacté jusqu'à une densité saturée située entre 1,6 t/m$^3$ et 2,3 t/m$^3$.

8. Procédé selon l'une quelconque des revendications précédentes, **caractérisé en ce qu'**une couche filtrante (8) est agencée entre le fond sous-marin surélevé et le noyau.

9. Procédé selon l'une quelconque des revendications précédentes, **caractérisé en ce que** la hauteur de la surélévation augmente suivant une inclinaison sensiblement constante en direction de la barrière anti-eau.

10. Procédé selon la revendication 9, **caractérisé en ce que** l'angle d'inclinaison avec la direction horizontale se situe entre 1:2 et 1:20, de préférence entre 1:5 et 1:15, et de manière particulièrement préférée, entre 1:7 et 1:10.

11. Procédé selon l'une quelconque des revendications 1-8, **caractérisé en ce que** la surélévation présente une inclinaison moyenne et étant entendu que cette inclinaison moyenne comprend un ou plusieurs paliers sensiblement horizontaux (9a, 9b).

12. Procédé selon l'une quelconque des revendications 9-11, **caractérisé en ce que** l'inclinaison est dotée d'une pluralité de barrières anti-eau qui se trouvent sensiblement alignées sur la barrière anti-eau.

13. Procédé selon la revendication 12, **caractérisé en ce que** les sommets des multiples barrières anti-eau se trouvent à une hauteur croissante, mais ne dépassent pas la hauteur sommitale de la barrière anti-eau.

14. Procédé selon l'une quelconque des revendications précédentes, **caractérisé en ce que** le fond sous-marin surélevé comprend du sable.

FIG. 1

FIG. 2

EP 2 379 810 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1030652 C2